**Europäisches Patentamt**

**European Patent Office**

**Office européen des brevets**

(19)

(11) Veröffentlichungsnummer : **0 124 693
B1**

(12) ## EUROPÄISCHE PATENTSCHRIFT

(45) Veröffentlichungstag der Patentschrift : 26.04.89

(21) Anmeldenummer : 84101770.0

(22) Anmeldetag : 21.02.84

(51) Int. Cl.⁴ : **F 02 M 25/00**

(54) **Verfahren zur Einbringung eines flüssigen Mediums in den Arbeitsraum einer Verbrennungskraftmaschine.**

(30) Priorität : 12.03.83 DE 3308886
14.01.84 DE 3401143

(43) Veröffentlichungstag der Anmeldung :
14.11.84 Patentblatt 84/46

(45) Bekanntmachung des Hinweises auf die Patenterteilung : 26.04.89 Patentblatt 89/17

(84) Benannte Vertragsstaaten :
AT BE DE FR GB IT NL SE

(56) Entgegenhaltungen :
DD–A– 25 034
DE–A– 2 851 232
DE–C– 657 946
FR–A– 915 573
FR–A– 2 504 984
GB–A– 1 527 130
US–A– 4 240 380
US–A– 4 391 230
US–A– 4 406 255
MARINE ENGINEERS REVIEW, April 1982, Warley, GB D.A. HOLLAND et al. "Successful running of a medium-speed diesel on emulsified fuel", Seiten 16, 17
Patent Abstracts of Japan Band 6, Nr. 1, 7. Januar 1982 & JP-A-56-124665

(73) Patentinhaber : **Forschungsgesellschaft für Energietechnik und Verbrennungsmotoren mbH
Augustinergasse 2
D-5100 Aachen (DE)**

(72) Erfinder : **Pischinger, Franz, Prof. Dr. techn.
Im Erkfeld 4
D-5100 Aachen (DE)**
Erfinder : **Söllner, Robert Dr. techn.
Sieglstrasse 15
A-6200 Jenbach (AT)**

(74) Vertreter : **Patentanwälte Dipl.-Ing. Alex Stenger Dipl.-Ing. Wolfram Watzke Dipl.-Ing. Heinz J. Ring Kaiser-Friedrich-Ring 70
D-4000 Düsseldorf 11 (DE)**

EP 0 124 693 B1

**Beschreibung**

Die Erfindung betrifft ein Verfahren zur Einbringung eines flüssigen Mediums, nämlich Wasser oder Alkohol, auch Alkoholgemische oder Alkohol/Wasser-Mischungen, in den Arbeitsraum einer Verbrennungskraftmaschine, dem über eine Zuleitung gasförmiger Kraftstoff zugeführt wird, wobei das flüssige Medium vor dem Eintritt in den Arbeitsraum kontinuierlich oder intermittierend dem gasförmigen Kraftstoff beigegeben wird. Die Erfindung ist entsprechend den Begriffen der DIN 1940 sowohl bei Gas-Otto-Motoren als auch bei Diesel-Gas- und Zündstrahl-Gas-Motoren anwendbar.

Ein bekanntes Ziel der Einbringung von Flüssigkeiten, insbesondere von Wasser oder Alkohol, auch von Alkoholgemischen oder Alkohol/Wasser-Mischungen, in den Brennraum von mit flüssigen oder gasförmigen Kraftstoffen betriebenen Motoren ist es, durch Absenken des Prozesstemperaturniveaus die Stickoxidkonzentration im Abgas zu verringern. Darüber hinaus läßt sich die Klopfneigung bei Verwendung von Kraftstoffen geringer Klopffestigkeit mittels Wassereinbringung beherrschen.

Die Einbringung von Wasser oder Alkohol in den Brennraum solcher Motoren ist ein seit langer Zeit bekanntes und erprobtes Mittel zur Verringerung der Stickoxid-Emission von Verbrennungsmotoren. Es wurde bereits mehrfach gezeigt, daß bis zu einer bestimmten Flüssigkeitsmenge keine negativen Auswirkungen auf das Wirkungsgradverhalten festzustellen sind.

Die Stickoxidbildung während der Verbrennung wird wesentlich durch die Verbrennungstemperatur bestimmt und läßt sich auch durch die Zumischung von inerten Komponenten zur Ladung reduzieren. Die inerten Ladungsbestandteile können entsprechend ihrer spezifischen Wärmekapazität — bei flüssigen Stoffen zusätzlich entsprechend ihrer Verdampfungswärme — einen erheblichen Anteil der während des motorischen Prozesses freigesetzten Wärme aufnehmen und senken so die Prozesstemperaturen.

Das Verfahren der eingangs angegebenen Art zur Einbringung eines flüssigen Mediums in Form von Wasser in den Arbeitsraum einer mit einem gasförmigen Kraftstoff in Form von Wasserstoff betriebenen Verbrennungskraftmaschine ist aus der DE-A-2 851 232 bekannt. Dabei wird in einem ersten Vergaser dem Wasserstoffgas feinverteilt Wasser zugegeben. Anschließend wird das so gebildete Gemisch in einem zweiten Vergaser in einer äußeren Gemischbildung mit Luft vermischt. Das so gebildete explosive Gemisch wird während eines Taktes beim Betrieb der Verbrennungskraftmaschine bei einer Abwärtsbewegung des Kolbens angesaugt und so dem Brennraum zur Verbrennung zugeführt. Zur Durchführung des bekannten Verfahrens bedarf es eines großen technischen Aufwandes. So muß, um eine feine Verteilung des Wassers im Wasserstoffgas zu erhalten, die Einspritzdüse das Wasser fein zerstäuben. Die dazu erforderlichen kleinen Düsenquerschnitte stellen hohe Anforderungen an die Aufbereitung des einzuspritzenden Wassers hinsichtlich Verschmutzung und hinsichtlich der Wasserhärte. Darüber hinaus ist eine gute Zerstäubung der Flüssigkeit nicht sichergestellt, weil mit Rücksicht auf hohe Zylinderfüllung beim Ansaugen des Gemisches niedrige Strömungsgeschwindigkeiten auftreten. Insgesamt ist somit mit dem bekannten Verfahren zur Einbringung eines flüssigen Mediums in den Arbeitsraum einer Verbrennungskraftmaschine ein langer Betrieb ohne zwischenzeitliche Wartung nicht möglich.

Aus der GB-A-1 527 130 ist ebenfalls ein Verfahren zur Einbringung eines flüssigen Mediums in Form von Wasser in den Arbeitsraum einer mit Wasserstoff betriebenen Verbrennungskraftmaschine bekannt. Dabei wird in einer äußeren Gemischbildung das Wasserstoffgas mit Luft zur Bildung eines explosiven Gemisches vermischt. Zu diesem Zweck ist eine Luftzuführung vorgesehen, in die eine Einspritzdüse für das Wasserstoffgas mündet. Zusätzlich mündet in die Luftzuführung eine Einspritzdüse, mit der dem explosiven Gemisch Wasser in Form von Wasserdampf zugeführt wird. Das so gebildete Gemisch wird dann bei einem Kolbenhub der Verbrennungskraftmaschine angesaugt und so dem Brennraum zur Verbrennung zugeführt. Auch hier bedarf es zur Durchführung des Verfahrens eines großen technischen Aufwandes, da an die Einspritzdüse für die Wasserzuführung hohe Anforderungen zu stellen sind.

Ausgehend von einem Verfahren der eingangs angegebenen Art liegt der Erfindung die Aufgabe zugrunde, das bekannte Verfahren derart weiterzuentwickeln, daß die Einbringung des flüssigen Mediums in den Arbeitsraum der Verbrennungskraftmaschine vereinfacht wird.

Als technische Lösung wird mit der Erfindung vorgeschlagen, daß das flüssige Medium in seiner flüssigen Phase unmittelbar vor dem Gas-Einlaßventil durch ein im Gas-Zuführungsrohr dicht oberhalb des Gas-Einlaßventils angeordnetes Dosierrohr dem gasförmigen Kraftstoff zugeführt und dem Einlaßventil in flüssiger Phase vorgelagert wird und daß anschließend das flüssige Medium beim Öffnen des Einlaßventils unter dem Druck des gasförmigen Kraftstoffs in den Arbeitsraum unter Zerstäubung durch den Ringspalt am Ventilsitz eingeblasen oder dort verdampft wird.

Der Erfindungsgedanke besteht somit darin, das flüssige Medium in seiner flüssigen Phase dem gasförmigen Kraftstoff zuzuführen und das so gebildete Kraftgas/Flüssigkeitsgemisch in den Arbeitsraum unter dem Druck des Kraftgases einzublasen, wobei erst dann die Verdampfung und die Überführung des flüssigen Mediums in die Gasphase eintritt. Die Vermischung der Verbrennungsluft mit dem Kraftgas sowie mit der verdampften Flüssigkeit erfolgt im Innern des Brennraumes in Form einer inneren Gemischbildung. Dies alles hat den Vorteil, daß sich das erfindungsgemäße Verfahren auf überaus einfache technische Weise durchführen läßt. Es sind keine aufwendigen und auch störanfälligen Zusatzeinrichtungen in Form von Einspritzanlagen notwendig, so daß insgesamt eine lange Lebensdauer bis zur Generalüberholung der Verbrennungskraftmaschine gewährleistet ist.

In einer vorteilhaften Weiterbildung weist bei der Verwendung eines Alkohol/Wasser-Gemisches als flüssiges Medium dieses 30 bis 70 Vol.- % Wasseranteil, vorzugsweise 45 bis 55 Vol.- % Wasseranteil auf. Insbesondere im letztgenannten Bereich liegt ein Optimum hinsichtlich erzielbarer Stickoxid-Reduzierung und günstigem spezifischen Kraftgasverbrauch.

Das als flüssiges Medium entweder allein oder im Gemisch mit Alkoholen zuzuführende Wasser kann vorteilhafterweise aufbereitetes Wasser aus dem kommunalen Wasser-Versorgungsnetz sein. Vor allem bei der stationären Anwendung der Verbrennungskraftmaschine macht sich diese Weiterbildung der Erfindung vorteilhaft bemerkbar, da es nach der Erfindung nicht erforderlich und nicht vorgesehen ist, mit einer Hochdruck-Einspritzanlage zu arbeiten. Der kommunale Wasserdruck reicht aus, so daß eine erhebliche Einsparung von Aggregatteilen erzielbar ist. Der Flüssigkeitsvordruck wird dabei vorteilhafter Weise über dem Vordruck der Gasversorgung gehalten.

Der als flüssiges Medium verwendete Alkohol umfaßt begrifflich verschiedene Reinheitsgrade, insbesondere auch das aufgrund von Herstellungsumständen und Einsatzstoffen nicht immer identisch zusammengesetzte Rohmethanol.

Gemäß einer zweckmäßigen Ausgestaltung des erfindungsgemäßen Verfahrens wird die Regelung der dem gasförmigen Kraftstoff beizumischenden Flüssigkeitsmenge in Abhängigkeit vom momentanen Gasverbrauch und/oder einer charakteristischen Bauteiltemperatur und/oder insbesondere in Abhängigkeit von einem Signal zur Erfassung der Klopfintensität vorgenommen. Diese Einflußgrößen können einzeln oder in Kombination zu mehreren zur Regelung herangezogen werden.

Es ist ferner zweckmäßig, daß gemäß einer weiteren Verbesserung des erfindungsgemäßen Verfahrens die Einstellung des aus den Regelgrößen ermittelten Flüssigkeitsdurchsatzes durch die Öffnungsdauer der Flüssigkeitszufuhr bei getakteter Steuerung und/oder durch die Druckdifferenz zwischen Flüssigkeits- und Gassystem und/oder durch Drosselung der Flüssigkeitszufuhr vorgenommen wird.

Dabei wird die Flüssigkeitszufuhr bei stehenden, auslaufenden oder nicht betriebswarmen Verbrennungskraftmaschinen zur Vermeidung von Motorschäden infolge Korrosion oder Flüssigkeitsschlag unterbrochen, wobei beim Abstellen in einer Folgesteuerung zuerst die Flüssigkeitszufuhr und anschließend nach einer definierten Zeit der Motor selbst abgeschaltet werden.

Weitere Einzelheiten, Merkmale und Vorteile des Gegenstands der Erfindung ergeben sich aus der nachfolgenden Beschreibung der zugehörigen Zeichnung, in der die Erfindung schematisch dargestellt ist. In der Zeichnung zeigt :

Fig. 1 eine Ausführungsform einer Vorrichtung zur Einbringung von Wasser in den Arbeitsraum einer Hubkolben-Verbrennungskraftmaschine, schematisch und

Fig. 2 einen Schnitt durch ein Einblaseventil.

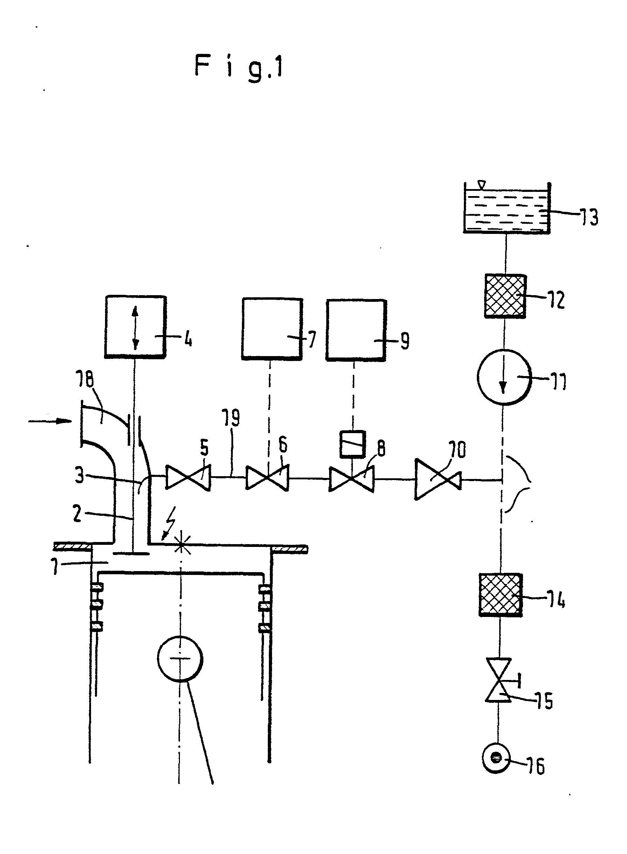

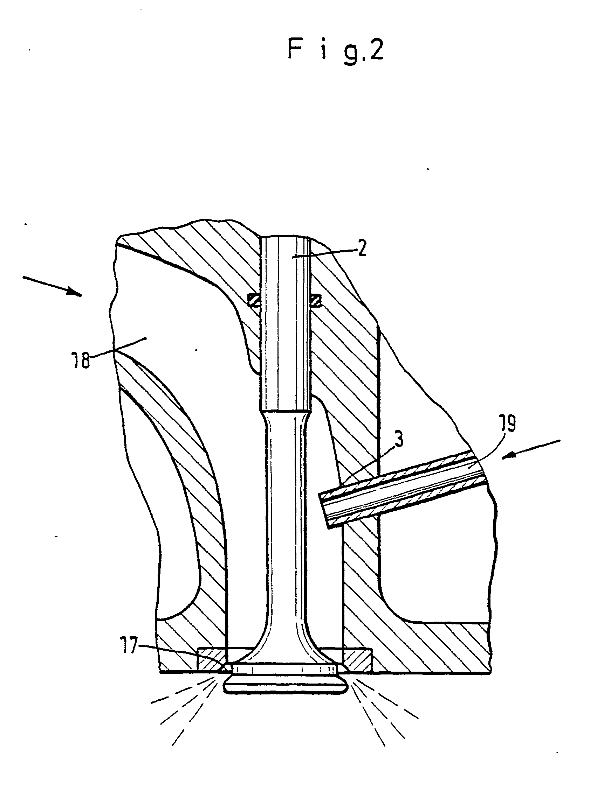

Fig. 1 der Zeichnung ist schematisch ein Brennraum 1 mit darunter angeordnetem Kolben einer Verbrennungskraftmaschine entnehmbar, an den ein Gas-Zuführungsrohr 18 für ein Kraftgas angeschlossen ist. Ein Einblaseventil 2 ist zur Steuerung der Zufuhr am Übergang vom Rohr 18 zum Brennraum 1 angeordnet, welches gemäß Fig. 2 der Zeichnung eine zylindrische Formgebung 17 im Sitzbereich derart aufweist, daß beim Öffnen nur ein enger, ringförmiger Spalt freigegeben wird.

Dicht oberhalb des Ventils 2 mündet über ein Dosierrohr 3 eine Zuleitung 19 für Wasser im Rohr 18, so daß es möglich ist, flüssiges Wasser unmittelbar vor das Ventil 2 zu fördern. Das vor dem Ventil 2 noch inhomogene Gas-Wasser-Gemisch wird beim Öffnen des Ventils, welches durch eine geeignete Ventilsteuerung 4 betätigt wird, in den Brennraum 1 unter dem Druck des Gasversorgungsnetzes der Maschine eingeblasen. Die sich durch den Ringspalt am Ventilsitz ergebenden hohen Gas-Einströmgeschwindigkeiten bewirken, daß das dem Ventil 2 vorgelagerte flüssige Wasser fein zerstäubt wird. Es erfolgt eine schnelle, vollständige Verdampfung des eingeblasenen Wassers im Brennraum 1.

Zur Regelung und Steuerung des Vorgangs der Wasserbeimengung sind in der Zufuhrleitung 19 hintereinander angeordnet ein Rückschlagventil 5, ein von einer Regeleinheit 7 betätigtes Regulierventil 6, ein von einer Sicherheitssteuereinheit 9 betätigtes Magnet-Absperrventil 8 und ein Druckminderer 10, wobei der weitere Anschluß der Zuleitung 19 an zwei alternativ dargestellte Wasserversorgungsmöglichkeiten gestrichelt in Fig. 1 der Zeichnung verdeutlicht ist.

Aus der Alternativdarstellung ist entnehmbar, daß das zuzugebende Wasser bei stationärer Anwendung des Motors direkt einem Wasser-Versorgungsnetz 16 über ein Absperrventil 15 und ein Filter 14 oder bei mobiler Anwendung einem Wasser-Vorratsbehälter 13 über ein Filter 12 mittels einer Förderpumpe 11 entnommen werden kann. Der Druckminderer 10 hält den Wasservordruck auf einen konstanten Wert, der über dem Vordruck der Gasversorgung liegt. Bei wechselndem Gasdruck ist der Druckminderer 10 als Differenzdruckregler auszuführen.

Das nachgeschaltete Magnet-Absperrventil 8 dient zur Unterbrechung der Wasserzufuhr und wird von einer Sicherheitssteuereinheit 9 nur bei laufender und betriebswarmer Maschine geöffnet. Beim Abstellen des Motors schaltet, eine in die Sicherheitssteuerung 8 integrierte Folgeschaltung zuerst die Wasserzufuhr und dann nach einer definierten Zeit den Motor ab. Damit werden Flüssigkeitsablagerungen im Motor mit allen schädlichen Folgen vermieden. Die oben angegebene Folgeschaltung hat jedoch keine Funktion bei einer Not-Aus-Betätigung.

Das Regulierventil 6 dient zur Regelung der zuzugebenden Wassermenge. Es kann als einstellbare Drossel bei kontinuierlicher oder als getaktetes Ventil bei intermittierender Wasserzufuhr ausgeführt

3

sein. Die entsprechend angepaßte Regeleinheit 7 stellt den Wasserdurchfluß in Abhängigkeit von einer oder auch mehreren Regelgrößen ein. Hierbei kann beispielsweise eine charakteristische Bauteiltemperatur, die Stellung eines Leistungsstellgliedes (Drosselklappe, Regelstange) oder das Signal einer zur Erfassung der Klopfintensität eingesetzten Meßkette zur Regelung herangezogen werden.

Eine weitere Möglichkeit zur Steuerung des Wasserdurchsatzes besteht darin, mit der Regeleinheit 7 auf einen einstellbar ausgeführten Druckminderer 10 als Stellglied zu wirken und mittels Veränderung der Druckdifferenz zwischen Wasser- und Gasreservoir den Wasserdurchsatz zu steuern.

Das Sicherheits-Rückschlagventil 5 ist unmittelbar vor dem Dosierrohr 3 installiert und verhindert das Ausströmen von Gas in das Wassersystem bei Ausbleiben des erforderlichen Wasservordrucks.

Anstelle des im obigen Ausführungsbeispiels der Erfindung als flüssiges Medium verwendeten Wassers können Alkohole, Alkoholmischungen oder Alkohol/Wasser-Gemische unter Benutzung der gleichen Vorrichtung in den Brennraum 1 des Gas-Motors eingebracht werden. An einem stationären, mit Gas betriebenen Einzylinder-Zweitakt-Versuchsmotor wurden folgende Meßergebnisse zur $NO_x$-Emission bei gleichem Wirkungsgrad (Verbrauch) prozentual zum jeweiligen Ausgangswert ermittelt, der den Motorenbetrieb ohne Zugabe eines flüssigen Mediums repräsentiert.

Beispiel 1 : Zugabe von Wasser

| | |
|---|---|
| Menge | 85 g/kWn$_{mech}$ |
| relative Verminderung der $NO_x$-Emission | 40 % |

Beispiel 2 : Zugabe von reinem Methanol

| | |
|---|---|
| Menge | 330 g/kWH$_{mech}$ |
| relative Reduzierung der $NO_x$-Emission | 50 % |

Beispiel 3 : Zugabe eines Methanol/Wasser-Gemisches mit 50 Vol. % Wasseranteil

| | |
|---|---|
| Menge an Methanol | 115 g/kWn$_{mech}$ |
| Menge an Wasser | 145 g/kWn$_{mech}$ |
| relative Reduzierung der $NO_x$-Emission | 70 % |

Im Bereich zwischen 45 und 55 Vol. % Wasseranteil im Methanol/Wasser-Gemisc wurden nahezu gleiche prozentuale $NO_x$-Reduzierungen erreicht.

Unter Inkaufnahme geringerer $NO_x$-Reduzierungen lassen sich auch erhebliche Verbrauchsverminderungen an Kraftgas bzw. Wirkungsgradverbesserungen bei Anwendung der Lehre der Erfindung erzielen.

**Patentansprüche**

1. Verfahren zur Einbringung eines flüssigen Mediums, nämlich Wasser oder Alkohol, auch Alkoholgemische oder Alkohol/Wasser-Mischungen, in den Arbeitsraum einer Verbrennungskraftmaschine, dem über eine Zuleitung gasförmiger Kraftstoff zugeführt wird, wobei das flüssige Medium vor dem Eintritt in den Arbeitsraum kontinuierlich oder intermittierend dem gasförmigen Kraftstoff beigegeben wird, dadurch gekennzeichnet, daß das flüssige Medium in seiner flüssigen Phase unmittelbar vor dem Gas-Einlaßventil durch ein im Gas-Zuführungsrohr dicht oberhalb des Gas-Einlaßventils angeordnetes Dosierrohr dem gasförmigen Kraftstoff zugeführt und dem Einlaßventil in flüssiger Phase vorgelagert wird und daß anschließend das flüssige Medium beim Öffnen des Einlaßventils unter dem Druck des gasförmigen Kraftstoffs in den Arbeitsraum unter Zerstäubung durch den Ringspalt am Ventilsitz eingeblasen und dort verdampft wird.

2. Verfahren nach Anspruch 1, dadurch gekennzeichnet, daß beim Alkohol/Wasser-Gemisch dieses 30 bis 70 Vol.-% Wasseranteil, vorzugsweise 45 bis 55 Vol.-% Wasseranteil aufweist.

3. Verfahren nach Anspruch 1 oder 2, dadurch gekennzeichnet, daß als flüssiges Medium aufbereitetes Wasser aus dem kommunalen Wasser-Versorgungsnetz verwendet wird.

4. Verfahren nach einem der Ansprüche 1 bis 3, dadurch gekennzeichnet, daß das in Form von Alkohol verwendete flüssige Medium herstellungsbedingte Verunreinigungen aufweist und insbesondere Rohmethanol ist.

5. Verfahren nach einem der Ansprüche 1 bis 4, dadurch gekennzeichnet, daß die Regelung der dem gasförmigen Kraftstoff beizumischenden Flüssigkeitsmenge in Abhängigkeit vom momentanen Gasverbrauch vorgenommen wird.

6. Verfahren nach einem der Ansprüche 1 bis 5, dadurch gekennzeichnet, daß die Regelung der dem gasförmigen Kraftstoff beizumischenden Flüssigkeitsmenge in Abhängigkeit von einer charakteristischen Bauteiltemperatur vorgenommen wird.

7. Verfahren nach einem der Ansprüche 1 bis 6, dadurch gekennzeichnet, daß die Regelung der dem gasförmigen Kraftstoff beizumischenden Flüssigkeitsmenge in Abhängigkeit von einem Signal zur Erfassung der Klopfintensität vorgenommen wird.

8. Verfahren nach einem der Ansprüche 1 bis 7, dadurch gekennzeichnet, daß die Einstellung des aus den Regelgrößen ermittelten Flüssigkeitsdurchsatzes durch die Öffnungsdauer der Flüssigkeitszufuhr bei getakteter Steuerung vorgenommen wird.

9. Verfahren nach einem der Ansprüche 1 bis 8, dadurch gekennzeichnet, daß die Einstellung des aus .den Regelgrößen ermittelten Flüssigkeitsdurchsatzes durch die Druckdifferenz zwischen Flüssigkeits- und Gassystem vorgenommen wird.

10. Verfahren nach einem der Ansprüche 1 bis 9, dadurch gekennzeichnet, daß die Einstellung des aus den Regelgrößen ermittelten Flüssigkeitsdurchsatzes durch Drosselung der Flüssigkeitszufuhr vorgenommen wird.

11. Verfahren nach einem der Ansprüche 1 bis 10, dadurch gekennzeichnet, daß die Flüssigkeitszufuhr bei stehenden, auslaufenden oder nicht betriebswarmen Verbrennungskraftmaschinen unterbrochen wird, wobei beim Abstellen in einer Folgesteuerung zuerst die Flüssigkeitszufuhr und anschließend nach einer definierten Zeit der Motor selbst abgeschaltet werden.

12. Verfahren nach einem der Ansprüche 1 bis 11, dadurch gekennzeichnet, daß der Flüssigkeitsvordruck über dem Vordruck der Gasversorgung gehalten wird.


## Claims

1. A method of introducing a liquid medium, namely water or alcohol, including alcohol mixtures or alcohol/water mixtures, into the working chamber of an internal combustion engine to which gaseous fuel is fed via a supply line, the liquid medium being added to the gaseous fuel continuously or intermittently before it enters the working chamber, characterised in that the liquid medium is fed in its liquid phase to the gaseous fuel immediately upstream of the gas intake valve via a metering tube disposed in the gas supply tube just above the gas intake valve and is introduced to the intake valve in the liquid phase and then on the opening of the intake valve under the pressure of the gaseous fuel the liquid medium is injected into the working chamber with atomization through the annular gap at the valve seat, where it is vaporized.

2. A method according to claim 1, characterised in that in the case of an alcohol/water mixture the same has a 30 to 70 vol.-% water proportion, preferably 45 to 55 vol.-% water proportion.

3. A method according to claim 1 or 2, characterised in that treated water from the communal water supply system is used as liquid medium.

4. A method according to any one of claims 1 to 3, characterised in that the liquid medium used in the form of alcohol has impurities arising out of its manufacture and, more particularly, is crude methanol.

5. A method according to any one of claims 1 to 4, characterised in that regulation of the amount of liquid to be added to the gaseous fuel is effected in dependence on the instantaneous gas consumption.

6. A method according to any one of claims 1 to 5, characterised in that regulation of the amount of liquid to be added to the gaseous fuel is effected in dependence on a characteristic component temperature.

7. A method according to any one of claims 1 to 6, characterised in that regulation of the amount of liquid to be added to the gaseous fuel is effected in dependence on a signal for detecting the knocking intensity.

8. A method according to any one of claims 1 to 7, characterised in that adjustment of the liquid throughput determined from the controlled conditions is effected by the duration of opening of the liquid supply with cyclic control.

9. A method according to any one of claims 1 to 8, characterised in that adjustment of the liquid throughput determined from the controlled conditions is effected by the pressure difference between the liquid and the gas systems.

10. A method according to any one of claims 1 to 9, characterised in that adjustment of the liquid throughput determined from the controlled conditions is effected by throttling the liquid supply.

11. A method according to any one of claims 1 to 10, characterised in that the liquid supply is interrupted in the case of internal combustion engines which are stationary, coming to a stop or have not reached operating temperature, the liquid supply first being switched off, followed by the engine itself after a specific time by a sequential control on shutdown.

12. A method according to any one of claims 1 to 11, characterised in that the liquid flow pressure is kept above the gas supply flow pressure.


## Revendications

1. Procédé pour introduire un milieu liquide, à savoir de l'eau ou de l'alcool, également des mélanges d'alcools ou des mélanges alcool/eau, dans la chambre de travail d'un moteur à combustion, un carburant sous forme gazeuse étant amené par une conduite d'alimentation à ladite chambre de travail, le milieu liquide étant joint au carburant sous forme gazeuse avant l'entrée dans la chambre de travail, de manière continue ou intermittente, caractérisée en ce que le milieu liquide se trouvant dans sa phase liquide est fourni au carburant sous forme gazeuse, directement avant la soupape d'entrée de gaz, au moyen d'un tube de dosage disposé dans le tube d'alimentation de gaz, surplombant de très près la soupape d'admission de gaz, et est fourni à la soupape d'admission sous forme liquide, et en ce qu'immédiatement après, le milieu liquide est insufflé dans la chambre de travail, lors de l'ouverture de la soupape d'admission, sous la pression du carburant sous forme gazeuse, en étant pulvérisé à travers la fente annulaire située au siège de soupape et en y étant vaporisé.

2. Procédé selon la revendication 1, caractérisé en ce que dans le cas du mélange alcool-eau, celui-ci présente une proportion d'eau de 30 à 70 % en volume, de préférence une proportion d'eau de 45 à 55 % en volume.

3. Procédé selon la revendication 1 ou 2, caractérisé en ce que l'on utilise comme milieu liquide de l'eau traitée provenant du réseau d'alimentation communal de l'eau.

4. Procédé selon l'une des revendications 1 à 3, caractérisé en ce que le milieu liquide utilisé sous forme d'alcool présente des impuretés dues à la fabrication et en particulier du méthanol brut.

5. Procédé selon l'une des revendications 1 à 4, caractérisé en ce que la régulation de la quantité de liquide à mélanger au carburant sous forme gazeuse est effectué en fonction de la consommation instantanée de gaz.

6. Procédé selon l'une des revendications 1 à 5, caractérisé en ce que la régulation de la quantité de liquide à mélanger au carburant sous forme gazeuse est effectué en fonction d'une température caractéristique de partie structurelle.

7. Procédé selon l'une des revendications 1 à 6, caractérisé en ce que la régulation de la quantité de liquide à mélanger au carburant sous forme gazeuse est effectué en fonction d'un signal captant l'intensité du cognement.

8. Procédé selon l'une des revendications 1 à 7, caractérisé en ce que le réglage du débit de liquide déterminé à partir des grandeurs réglées est effectué au moyen de la durée d'ouverture de l'alimentation de liquide avec une commande cadencée.

9. Procédé selon l'une des revendications 1 à 8, caractérisé en ce que le réglage du débit de liquide déterminé à partir des grandeurs réglées est effectué au moyen de la différence de pression entre système liquide et système gazeux.

10. Procédé selon l'une des revendications 1 à 9, caractérisé en ce que le réglage du débit de liquide déterminé à partir des grandeurs réglées est effectué par étranglement de l'alimentation de liquide.

11. Procédé selon l'une des revendications 1 à 10, caractérisé en ce que l'alimentation de liquide est interrompue dans le cas d'un moteur à combustion interne arrêté, au ralenti, ou n'ayant pas atteint la température de fonctionnement, l'alimentation de liquide étant mise hors service en premier lieu lors de l'arrêt dans une commande séquentielle et le moteur lui-même étant stoppé immédiatement après, après écoulement d'un temps défini.

12. Procédé selon l'une des revendications 1 à 11, caractérisé en ce que la pression d'admission du liquide est maintenue au-dessus de la pression d'admission de l'alimentation en gaz.

# F i g.1

# F i g.2